# EUROPÄISCHE PATENTANMELDUNG

(11) **EP 0 629 597 A1**
(43) Veröffentlichungstag der Anmeldung: **21.12.1994**
(21) Anmeldenummer: 94108341.2
(22) Anmeldetag: 31.05.1994
(51) Int. Cl.: C04B 40/02, F16L 58/06

(54) **Verfahren zur Behandlung von Trinkwasser-Rohrleitungen**

(30) Priorität: 15.06.1993 DE 4319761
(71) Anmelder: STADTWERKE HANNOVER AG, D-30499 Hannover (DE)
(72) Erfinder: Bayer, Gerold, D-31832 Springe (DE); Borninger, Robert, D-31832 Springe (DE)
(74) Vertreter: Eikenberg, Kurt-Rudolf, Dr. Dipl.-Chem.

(57) **Zusammenfassung**

Das beschriebene Verfahren betrifft die Behandlung von Trinkwasser-Rohrleitungen, deren Innenflächen zumindest teilweise aus frischem Zementmörtel bestehen, und hat zum Gegenstand, daß die Rohrleitung (1) mit einer Gasmischung beaufschlagt wird, die Kohlendioxid in einer Konzentration oberhalb der normalen atmosphärischen Kohlendioxid-Konzentration enthält. Diese Konzentration liegt im Bereich von 5 - 95 Vol.%. Die Dauer der Behandlung beträgt weniger als 24 Stunden und vorzugsweise 1 - 6 Stunden.

Durch das neue Verfahren werden die Rohrleitungen innerhalb kürzester Zeit gebrauchsfertig, was bei der Sanierung der Rohrleitungen in situ durch eine nachträglich aufgetragene Zementmörtel-Auskleidung mit dem besonderen Vorteil verbunden ist, daß die bisher erforderliche, mit viel Kosten und Zeitaufwand verbundene Spülung der Rohrleitung entfallen kann. Vorzugsweise wird dabei die Beaufschlagung der Rohrleitung Innerhalb von weniger als 24 Stunden und vorzugsweise innerhalb von 5 - 10 Stunden nach dem Auftrag der Auskleidung begonnen.

## Beschreibung

In Trinkwasser-Versorgungssystemen besteht die ständige Gefahr, daß alte Rohrleitungen, insbesondere solche aus Gußeisen, durch Korrosion unbrauchbar werden. Da eine Verlegung neuer Rohre mit sehr erheblichen Kosten verbunden ist, werden korrodierte Rohre, deren Korrosionszustand noch nicht zu weit fortgeschritten ist, üblicherweise in situ durch Auskleidung mit einer Zementmörtelschicht saniert. Der Auftrag des Zementmörtels geschieht dabei (nach vorheriger mechanischer Reinigung des betroffenen Rohrabschnitts) im Schleuderverfahren, das eine gleichmäßige glatte Beschichtung der Rohrinnenwand gewährleistet und jedenfalls bei größeren Rohrdurchmessern (Nennweiten ab DN 100) problemlos angewendet werden kann.

Diese nachträgliche Sanierung korrodierter Rohre hat sich im Ergebnis gut bewährt. Sie verhindert nicht nur ein Fortschreiten der Innenkorrosion mit allen daraus resultierenden Folgen, sondern verbessert auch die hydraulischen Eigenschaften des Rohres (Vermeidung von Inkrustationen) sowie die bakteriellen Eigenschaften des Wassers. Nachteilig ist es jedoch, daß im Anschluß an den Auftrag der Auskleidung noch umfängliche Nacharbeiten durchgeführt werden müssen, die zeitaufwendig und kostenintensiv sind.

Ein frisch ausgekleidetes Rohr muß bei dem bisherigen Verfahren zunächst gespült und dann desinfiziert werden, bevor es wieder in Betrieb genommen werden kann. Mit der Spülung wird im allgemeinen etwa 24 Stunden nach dem Auftrag der Auskleidung begonnen werden, weil der Zementmörtel innerhalb dieses Zeitraumes ausreichend abgebunden hat und mit strömendem Wasser beaufschlagt werden kann. Nach dem ersten Befüllen des Rohres können in dem Spülwasser jedoch pH-Werte von über 12 erreicht werden, und zwar bedingt durch die Tatsache, daß bei der Aushärtung des Zementmörtels Calciumhydroxid freigesetzt wird. Dieses Calciumhydroxid geht im Spülwasser in Lösung und führt zu einer Entsäuerung mit anschließender Entcarbonisierung des Wassers, gefolgt von einem pH-Anstieg. Das Wasser aus ungenügend gespülten Leitungen ist somit kalkübersättigt und kann beim Verbraucher zu massiven Störungen führen, ganz abgesehen davon, daß aufgrund der Trinkwasserverordnung ohnehin ein pH-Wert von 9,5 nicht überschritten werden darf.

Das in Lösung gegangene Calciumhydroxid kann nur durch Spülen aus der Leitung eliminiert werden. Dies gilt auch für die Reaktionsprodukte der Entkarbonisierung, soweit sie als Schlamm anfallen. Die Spülung muß also solange aufrechterhalten bleiben, bis die Mörtelschicht keinen "Nachschub" an Calciumhydroxid mehr liefert und sich ein akzeptabler pH-Wert eingestellt hat. Als akzeptabel im Sinne einer Wiederinbetriebnahme des sanierten Rohres gilt dabei ein pH-Wert von 8,3 und geringer, weil oberhalb dieses Wertes keine wirksame Desinfektion möglich ist. Die Desinfektion geschieht üblicherweise durch Hochchlorung mit Chlorgas oder Chlorbleichlauge, und diese Stoffe zeigen oberhalb eines pH-Wertes von 8,3 keine Wirkung mehr, d.h. es findet dann eine zuverlässige Oxidation organischer und mikrobieller Kontaminationen nicht mehr statt.

Je nach den Randbedingungen liegt die Spülzeit bis zum Erreichen eines pH-Wertes von mindestens 8,3 normalerweise zwischen 2 und 10 Tagen. Dies ist im wesentlichen abhängig von den folgenden Faktoren:
- Chemische Beschaffenheit des Wassers, wobei Wässer mit hohem Gehalt an Karbonathärte und "zugehöriger Kohlensäure" weniger empfindlich auf frische Mörteloberflächen reagieren als Wässer mit geringer Karbonathärte,
- Abbindezeit des Zementmörtels vor Beginn der Spülung,
- Verhältnis der Mörteloberfläche (Rohrnennweite) zum Wasservolumen,
- Länge des ausgekleideten Rohres, wobei die Spülzeit mit steigender Rohrlänge ansteigt,
- Spülwasserdurchsatz, der häufig durch die Entsorgungsmöglichkeit für das Abwasser begrenzt ist.
Bei ungünstigen Randbedingungen - langer Teilabschnitt, ungenügender Spülwasserdurchsatz - können auch Spülzeiten bis zu 4 Wochen notwendig sein.

In jedem Fall ergibt sich somit ein hoher Spülwasserbedarf, der je nach den Randbedingungen einige 100 m³ bis über 10 000 m³ betragen kann. Beispielsweise wurden bei elf von den Stadtwerken Hannover durchgeführten Auskleidungsmaßnahmen insgesamt etwa 40 000 m³ Spülwasser verbraucht, wobei die durchschnittliche Spülzeit etwa 6 Tage betrug. Neben den Gestehungskosten für das zum Spülen eingesetzte Trinkwasser entstehen Lohnkosten für die mehrmals täglich erforderliche Hydrantenkontrolle sowie gegebenenfalls weitere Nebenkosten für Baustellenabsperrung und Wartezeiten der Baukolonnen. Darüberhinaus werden die Anlieger während der langen Spülzeit durch Baumaßnahmen und Notversorgung beeinträchtigt.

Mit der Erfindung soll nunmehr ein Verfahren zur Behandlung von Trinkwasser-Rohrleitungen zur Verfügung gestellt werden, das die vorangehend geschilderten Nachteile vermeidet und es gestattet, frisch ausgekleidete Rohre ohne Spülung innerhalb kurzer Zeit in einen für die Desinfektion und anschließende Wiederinbetriebnahme geeigneten Zustand zu bringen. Dieses Ziel wird erfindungsgemäß dadurch erreicht, daß die Rohrleitung mit einer Gasmischung beaufschlagt wird, die Kohlendioxid in einer Konzentration oberhalb der normalen atmosphärischen Kohlendioxid-Konzentration enthält.

Es hat sich gezeigt, daß durch eine Behandlung des frisch ausgeklei-deten Rohres mit Kohlendioxid das Calciumhydroxid in der Mörteloberfläche unter Bildung von unlöslichen Calciumcarbonat gebunden wird. Untersuchungen der Bundesanstalt für Geowissenschaften und Rohstoffe in Hannover haben inzwischen auch bestätigt, daß sich unter der Einwirkung des Kohlendioxids auf der Mörteloberfläche extrem feinkörnige Calciumcarbonat-Kristalle ausbilden und mit zunehmender Einwirkungsdauer eine Karbonatfront entlang der Korngrenzen der Mörtelmatrix in den Mörtel eindringt. Dies hat die für den Erfolg der Erfindung entscheidende Folge, daß schon bei einer geringen Eindringtiefe von etwa 0,3 bis 1,5 mm (abhängig von Art und Aufbau der Mörtelmatrix) ein Austritt von Calciumhydroxid aus dem Innern des Mörtels in eine Wasserfüllung des Rohres verhindert wird, also praktisch eine Art Versiegelungsschicht entsteht.

Die frisch ausgekleideten Rohre können auf diese Weise schon nach einer verhältnismäßig kurzen Behandlungszeit (Standdauer des gasgefüllten Rohres), die in jedem Fall erheblich geringer ist als die bisher zum Spülen benötigten Zeiten, mit Wasser befüllt werden, ohne daß sich ein unerwünschter Anstieg des pH-Wertes einstellt. Da die Versiegelungsschicht aus Calciumcarbonat besteht und das Wasser sich sehr weitgehend im Kalk-Kohlensäure-Gleichgewicht befindet, verhält sich die versiegelte Mörteloberfläche dem Wasser gegenüber völlig neutral.

Bei der Erfindung wird somit der bisher erforderliche Arbeitsschritt der Spülung durch den Arbeitsschritt der Kohlendioxid-Behandlung ersetzt. Da nach der Kohlendioxid-Behandlung kein Calciumhydroxid mehr in die Wasserfüllung des Rohres gelangt und somit auch keine Maßnahmen zur Einstellung eines ausreichend niedrigen pH-Wertes mehr erforderlich sind, ist es möglich, frisch ausgekleidete Rohre im unmittelbaren Anschluß an die Kohlendioxid-Behandlung zu desinfizieren und dann wieder in Betrieb zu nehmen. Dies bedeutet die völlige Einsparung des Trinkwassers, das bislang für die Spülvorgänge verloren gegangen ist, und dies bedeutet weiterhin eine drastische Senkung des Kosten- und Zeitaufwandes für die Nachbehandlung der Rohrauskleidungen.

Ein solcher Erfolg der Erfindung muß als überraschend angesehen werden. Allgemein dauert nämlich eine Karbonatisierung eines frischen Zementmörtels unter der Einwirkung des in der Luft enthaltenen Kohlendioxids, wie aus der Bautechnik bekannt, Wochen und Monate. Andererseits hat eine Anreicherung des Spülwassers mit Kohlendioxid zu keinem Ergebnis geführt. Entsprechende Versuche haben nämlich ergeben, daß ein mit Kohlensäure angereichertes Spülwasser zwar bereits innerhalb einiger Stunden pH-Werte im Bereich zwischen 6 und 6,5 aufweist, daß aber die Karbonat-Bildung im Wasser und nicht auf der Mörteloberfläche stattfindet. Das im Wasser teilweise zu Kohlensäure hydratisierte Kohlendioxid löst die Calcium-Ionen aus dem Mörtel heraus, wodurch Calciumcarbonat im Wasser ausfällt und die Mörteloberfläche zerstört wird. Bei einer solche Ausgangslage war nicht vorhersehbar, daß eine kurzzeitige Kohlendioxid-Behandlung des Rohres nicht nur zu einer Immobilisierung der Calcium-Ionen führt, sondern darüber hinaus eine dichte Versiegelungsschicht ergibt, welche die Auskleidung in einen sofort weiterbehandelbaren Zustand versetzt.

Der Kohlendioxid-Bedarf zur Bildung der Versiegelungsschicht auf der Mörteloberfläche liegt bei 70 l CO₂/m² Mörtelfläche oder 140 CO₂/m² Mörtelfläche. Dabei ist die Konzentration des Kohlendioxids in der Gasmischung nicht kritisch. Sie kann im Bereich von 5 bis 95 Vol.% liegen und beträgt damit in jedem Fall ein Vielfaches der atmosphärischen Kohlendioxid-Konzentration von etwa 0,03 Vol.%. Mit steigender Konzentration sinkt die erforderliche Behandlungszeit In wünschenswerter Weise. Dem steht jedoch gegenüber, daß mit steigender Konzentration die Kosten ansteigen, weil das restliche Kohlendioxid nach beendeter Behandlung nicht zurückgewonnen werden kann. In der Praxis wird sich daher ein von Anwendungsfall zu Anwendungsfall unterschiedlicher Kompromiß zwischen den Kosten einerseits und der Behandlungszeit andererseits ergeben, und zwar dahingehend, daß in den Fällen, in denen es auf schnellstmögliche Wiederinbetriebnahme ankommt, mit einer höheren Konzentration gearbeitet wird, während in anderen Fällen längere Behandlungszeiten bei entsprechend geringeren CO₂-Kosten tolerierbar sind.

Die Behandlungszeit beträgt normalerweise weniger als 24 Stunden und ist damit selbst bei geringeren Konzentrationen an Kohlendioxid meistens ausreichend kurz, so daß höhere Konzentrationen nur in besonders gelagerten Fällen erforderlich sind. Behandlungszeiten von 1 - 6 Stunden, die sich mit vertretbarem Aufwand an Kohlendioxid ohne weiteres erreichen lassen, sind dabei besonders wünschenswert, weil sie eine Überwachung der Baustelle durch das in der regulären Arbeitszeit anwesende Baustellenpersonal ermöglichen.

Ein zusätzlicher Vorteil der Erfindung, der auch zur Zeitersparnis beiträgt, besteht darin, daß bis zum Beginn der Kohlendioxid-Behandlung nicht die rund 24 Stunden Abbindezeit abgewartet werden müssen, die für den Beginn einer Spülung erforderlich sind. Da die Auskleidung nicht mehr mit strömendem Wasser in Kontakt gebracht zu werden braucht, kann die Kohlendioxid-Behandlung nach sehr viel kürzerer Zeit begonnen werden, beispielsweise bereits nach etwa 5 - 10 Stunden nach dem Auftrag der Auskleidung. Derartig kurze Zeiten haben sich sogar als besonders vorteilhaft für die schnelle Bildung einer stabilen Versiegelungsschicht erwiesen, während die bisher für das Spülen benötigte Wartezeit von rund 24 Stunden bei der Erfindung die obere Grenze für den Beginn einer erfolgreichen Behandlung darstellt.

Weiterhin hängt die Behandlungszeit kaum noch von der Rohrlänge ab, so daß auch sehr viel längere Rohrabschnitte in einem Arbeitsgang behandelt werden können, als dies bisher mit dem Verfahren der Spülung zweckmäßig war.

Überdies bildet auch die Entsorgung der Gasmischung nach beendeter Behandlung keinen zeitverzögernden Faktor, weil die Gasmischung in die Umgebungsluft entlassen werden kann. Dies ist nicht als Umweltbelastung anzusehen, denn das eingesetzte Kohlendioxid ist ein ohnehin angefallenes Restprodukt aus industriellen Prozessen, das z.B. aus der Gaswäsche von Abgasen oder den Gärgasen von Brennereien und Brauereien gewonnen und nicht für die Zwecke der Erfindung zusätzlich erzeugt worden ist.

Die Erfindung wurde vorangehend am Beispiel der Nachbehandlung von frisch ausgekleideten Rohrleitungen erläutert. Sie ist jedoch nicht auf diesen Anwendungsfall beschränkt, sondern gleichermaßen auch z.B. bei der Herstellung neuer zementgebundener Trinkwasser-Rohre mit Erfolg einsetzbar. Zwar karbonatisieren neu hergestellte Rohre bei ausreichend langer Lagerung von selbst unter der Einwirkung des atmospärischen Kohlendioxids, aber lange Lagerzeiten binden Kapital und sind mit Aufwand verbunden. Außerdem kann sich durch das atmoshärische Kohlendioxid nicht die dichte Versiegelungsschicht ausbilden, die mit der Erfindung erreicht wird.

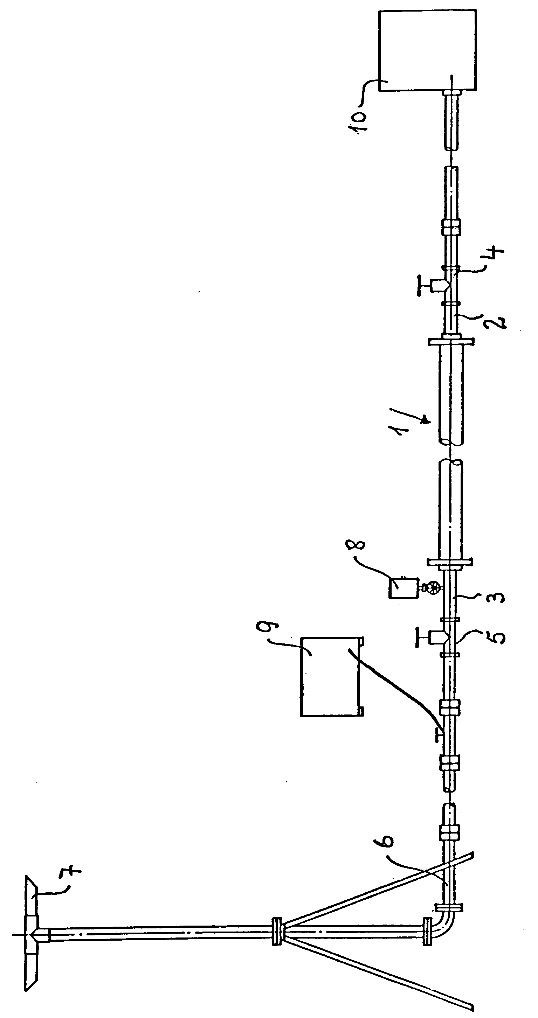

Nachfolgend wird ein Ausführungsbeispiel der Erfindung näher erläutert, und zwar anhand der Zeichnung, die schematisch eine Anlage zur Behandlung eines in situ ausgekleideten Rohres darstellt.

In der zeichnerischen Darstellung ist angenommen, daß ein Abschnitt 1 einer Trinkwasserleitung soeben mit einer Auskleidung aus Zementmörtel versehen worden ist. An die Enden des Rohrabschnitts 1, die sich jeweils in einer nicht weiter dargestellten Baugrube befinden, sind ein Einlaßstutzen 2 und ein Auslaßstutzen 3 angeflanscht, die jeweils mit einem Absperrschieber 3 bzw. 4 versehen sind. Einer der beiden Stutzen ist außerdem mit einem Manometer 8 ausgerüstet.

Vom Auslaßstutzen 3 aus führt eine Rohrleitung 6 zu einem Düsengalgen 7, der etwa 3 - 4 m oberhalb des Bodenebene endet und dafür sorgt, daß alle Abgase in ausreichendem Abstand von der Baugrube gut mit der Umgebungsluft vermischt werden. An die Rohrleitung 6 oder an den Auslaßstutzen 3 ist weiterhin noch ein Meßgerät zur Messung der CO₂-Konzentration angeschlossen. Einlaßseitig sind dem Stutzen 2 eine CO₂-Quelle (z.B. in Form einer fahrbaren Flaschenbatterie oder - bei größeren zu befüllenden Volumina - eines CO₂-Tankwagens) sowie eine Preßluft-Quelle zugeordnet, die nur global durch das Bezugszeichen 10 angedeutet sind.

Zur Befüllung wird bei geöffneten Absperrschiebern 4 und 5 solange ein Luft/CO₂-Gemisch in den Rohrabschnitt 1 eingeblasen, bis das Meßgerät 9 die gewünschte CO₂-Konzentration anzeigt. Dann werden die beiden Schieber 4 und 5 geschlossen, um das CO₂ auf die Auskleidung einwirken zu lassen. Nach Ablauf der Behandlungszeit wird die Gasfüllung des Rohrabschnitts 1 bei wieder geöffneten Schiebern 4 und 5 mit Preßluft ausgetrieben, bis sie kein CO₂ mehr enthält.

Anschließend wird (nach Entfernen des Düsengalgens 7) der Rohrabschnitt 1 über die Stutzen 2 und 3 mit Chlorbleichlauge (Hochchlorung: etwa 50 mg/l Cl₂) gefüllt und nach etwa 24 Stunden Standzeit freigespült. Der Wasserverbrauch beschränkt sich dabei auf das Volumen des Rohrabschnitts 1 für die Füllung mit dem chlorhaltigen Wasser plus etwa das 1,5- bis 2-fache dieses Volumens für die Freispülung. Danach können die Stutzen 2 und 3 abgenommen werden, um den Rohrabschnitt wieder in die Versorgungsleitung einzuschalten.

Bereits während der Befüllung des Rohrabschnitts 1 mit dem Luft/CO₂-Gemisch wird schon ein Teil des CO₂-Bedarfs der Auskleidung gedeckt. Nach dem Schließen der beiden Schieber 4 und 5 wird weiteres CO₂ verbraucht, was zu einem Unterdruck in dem Rohrabschnitt 1 führt. Sollte ein solcher Unterdruck aus irgendwelchen Gründen nicht zulässig sein, kann an einen der beiden Stutzen 2 oder 3 noch ein Vorratsbehälter angeschlossen werden, der mit dem Luft/CO₂-Gemisch gefüllt ist und z.B. über ein durch das Manometer 8 gesteuertes Ventil den Druckabfall im Rohrabschnitt 1 ausgleicht. Dies ist zeichnerisch nicht mehr weiter dargestellt.

## Patentansprüche

1. Verfahren zur Behandlung von Trinkwasser-Rohrleitungen, deren Innenflächen zumindest teilweise aus frischem Zementmörtel bestehen, dadurch gekennzeichnet, daß die Rohrleitung mit einer Gasmischung beaufschlagt wird, die Kohlendioxid in einer Konzentration oberhalb der normalen atmosphärischen Kohlendioxid-Konzentration enthält.

2. Verfahren nach Anspruch 1, dadurch gekennzeichnet, daß die Konzentration des Kohlendioxids in der Gasmischung im Bereich von 5 - 95 Vol.% liegt.

3. Verfahren nach Anspruch 1 oder 2, dadurch gekennzeichnet, daß die Dauer der Behandlung der Rohrleitung mit der Gasmischung weniger als 24 Stunden und vorzugsweise 1 - 6 Stunden beträgt.

4. Anwendung des Verfahrens nach einem der Ansprüche 1 - 3 bei der Sanierung von Rohrleitungen in situ durch eine nachträglich aufgetragene Zementmörtel-Auskleidung, wobei die Beaufschlagung der Rohrleitung innerhalb von weniger als 24 Stunden und vorzugsweise innerhalb von 5 - 10 Stunden nach dem Auftrag der Auskleidung begonnen wird.
